# EUROPEAN PATENT APPLICATION

(11) **EP 4 818 514 A1**
(43) Date of publication of application: **07.10.2026**
(21) Application number: 25168187.0
(22) Date of filing: 03.04.2025
(51) Int. Cl.: F03D 1/06, B29C 70/08, B29B 11/16, B32B 5/26, B32B 5/06, B29C 70/48, B29C 65/48

(54) **METHOD FOR MANUFACTURING A CONNECTING FLANGE OF A WIND TURBINE ROTOR BLADE, WIND TURBINE ROTOR BLADE**

(71) Applicant: Nordex Energy SE & Co. KG, 22419 Hamburg (DE)
(72) Inventor: Block, Tim Berend, 22419 Hamburg (DE)
(74) Representative: Völkl Siebenson Patentanwälte - Partnerschaft mbB

(57) **Abstract**

The invention relates to a method for manufacturing a connecting flange (128) of a wind turbine rotor blade (110), comprising the following steps:
a) placing a first fiber layer (202) into a mold (400),
b) placing a first prefabricated flange segment (300) with an outer side (314) onto a first portion (206) of the first fiber layer (202), in particular such that a second portion (208) of the first fiber layer (202) remains uncovered by the first prefabricated flange segment (300),
c) placing a second prefabricated flange segment (301) into the mold (400) adjacent to the first prefabricated flange segment (300), wherein an end face (324) of the second prefabricated flange segment (301) faces the end face (318) of the first prefabricated flange segment (300) such that a gap (302) is formed between the two prefabricated flange segments (300, 301) and the second portion (208) of the first fiber layer (202) extends through the gap (302).

## Description

The invention refers to a method for manufacturing a connecting flange of a wind turbine rotor blade, wherein at least two prefabricated flange segments are arranged next to each other.

Wind turbines with wind turbine rotor blades are widely known from the state of the art and are used to convert wind energy into electrical energy. A wind turbine rotor blade comprises a root flange, which is the interface for connecting the rotor blade with the rotor hub of the wind turbine. In case of a segmented blade, a segment of the wind turbine rotor blade comprises a segmentation flange, which is the interface for connecting the rotor blade segment with an adjacent rotor blade segment. Generally, the root flange and the segmentation flange are named connecting flange.

For manufacturing a root flange or segmentation flange, prefabricated flange segments, e.g. prefabricated root segments, and further components like fiber layers are arranged in a respective mold and finally embedded in an infused resin.

Each flange segment is a prefabricated part, which in particular comprises fiber layers, stiffening elements and connecting elements, e.g. threaded bushings, for mounting the rotor blade with the root to a rotor hub with screw bolts or for mounting rotor blade segments together. All these items are put into a respective flange segment mold and embedded in an appropriate resin during a vacuum infusion process to produce the flange segment. In a subsequent step, to manufacture the wind turbine rotor blade or a half shell, the flange segments are brought into a corresponding mold together with other elements. In particular, inner and outer fiber layers are arranged in the mold covering the inside and the outside of the flange segments. Due to manufacturing tolerances there is a small gap of some millimeters between two adjacent flange segments, which is bridged by the inner and outer fabric layers. Such gap is a critical region, because it is filled by pure resin during the vacuum infusion of the rotor blade shell.

It is therefore an object of the invention to provide an improved manufacturing method, wherein in particular care is taken about the gap region.

This object is solved by a solution according to the independent claims. Advantageous embodiments are given in the sub-claims.

According to a first aspect, a method for manufacturing a connecting flange of a wind turbine rotor blade is disclosed. The method comprises the steps of:
a) placing a first fiber layer into a mold,
b) placing a first prefabricated flange segment with an outer side onto a first portion of the first fiber layer, in particular such that a second portion of the first fiber layer remains uncovered by the first prefabricated flange segment,
c) placing a second prefabricated flange segment into the mold adjacent to the first prefabricated flange segment,
wherein an end face of the second prefabricated flange segment faces the end face of the first prefabricated flange segment such that a gap is formed between the two prefabricated flange segments and a second portion of the first fiber layer extends through the gap.

The method according to the invention provides a fiber material to be introduced into the gap. In this process, the fibrous material is not merely introduced into the gap but is introduced in an ordered and aligned manner. The first fiber layer is introduced into the mold in such a way that part of this first fiber layer runs along the outer side of the first prefabricated part and part of this fibrous layer runs in the gap. In particular, the first fiber layer is folded around an outer edge of the end face, the outer edge running between the end face and the outer side of the first prefabricated flange segment.

This method improves the quality and structural integrity of a connecting flange in the region of the gap between two adjacent flange segments. In particular, a defined fiber continuity through the gap is achieved. This significantly reduces stress concentrations, since regions in the gap only filled with resin are avoided. In other words, the gap is homogeneously filled with fiber material and resin. Further, the share of manual labor can be reduced.

Further, the method contributes to an improved structural performance of the connection of the flange segments and thus of the entire rotor blade, due to reduced manufacturing scatter and smaller resin gaps as well as better overlaminate placement.

The described method is particularly advantageous for future wind turbine designs. Since these designs aim at even longer rotor blades, e.g. more than 70 m, resulting in higher load requirements of the connecting flanges, the method helps to improve the performance of the connection between the flange segments with regard to the weak spot, namely the gap.

After step c) further subsequent steps for manufacturing the rotor blade may take place. Such further steps are, amongst others: laying further fiber layers into the mold, laying further parts into the mold, performing the vacuum infusion process, curing the resin, and further.

The outer side of the first prefabricated flange segment is assigned to the outer side of the finished rotor blade. The outer side of the first prefabricated flange segment faces the inner mold surface of the mold. An inner side of the first prefabricated flange segment is opposite to the outer side and faces away from the inner mold surface. The end face runs transverse to both the inner side and the outer side of the first prefabricated flange segment. In other words, the end face runs normally to the inner mold surface, i.e. extends vertically with respect to the inner mold surface. The end face runs along the longitudinal direction of the prefabricated flange segments or the finished rotor blade. The end face of the first prefabricated flange segment faces the end face of the second prefabricated flange segment. The above definitions likewise apply to the second prefabricated flange segment.

The second prefabricated flange segment is placed with its outer side into the mold.

The first fiber layer serves as a structural reinforcement for the gap region. The first fiber layer, for example, is dry fiber material, e.g. glass fiber material. The first fiber layer may protrude out of the gap at the inner side of the first or second prefabricated flange segment, e.g. for later placement onto an inner side of the prefabricated segments.

As already indicated above, the prefabricated flange segments are (pre-)cured parts. For example, the prefabricated flange segments are root flange segments or segmentation flange segments of the wind turbine rotor blade. The prefabricated flange segments may have a curved structure, e.g. circular, corresponding to the aerodynamic shell of the finished rotor blade and depending on whether it is intended for the rotor blade flange or a segmentation flange. Such prefabricated flange segments may each have integrated a plurality of connecting elements like threaded bushings.

Alternatively, a prefabricated flange segments may each comprise only one connecting element. Such prefabricated flange segments each may comprise an essentially rectangular or trapezoid cross-section. For example, a plurality of such prefabricated flange segments is arranged adjacent to each other along the aerodynamic shell of the finished rotor blade.

During the above method, the position of the prefabricated flange segments in the mold is, for example, defined by a flange part connected to the mold, e.g. the half shell mold. The prefabricated flange segments are attached to the flange part to have a fixed position. Alternatively, the position of prefabricated parts in the mold is defined by means of a laser positioning device. In the defined position, the gap is formed, which typically has a width of 2 mm to 10 mm, preferably 2 mm to 6 mm. Deviations of the gap dimensions, e.g. a width and/or a shape of the gap, relate from manufacturing tolerances of the prefabricated flange segments.

According to an embodiment, in order to achieve a constant quality in the gap region, it is advantageous to accept a reasonably sized gap, e.g. 2mm - 6mm, that is filled with qualitatively good, i.e. defined, material (fiber material and resin) compared to minimizing the gap down to 0 mm and filling it with pure resin. In the latter, non-preferred case, a relative small tolerance of e.g. 1 mm on each prefabricated flange segment will lead to a relatively large variation of the gap size. The same variation will be less severe with a nominal gap size of e.g. 5 mm particularly when filled with dry material that itself allows some variation in compressibility and thus thickness.

It is noted here that for manufacturing the connecting flange a mold for producing a half shell of a wind turbine rotor blade can be used, with which the connecting flange is manufactured. In other embodiments, the connecting flange can be separately manufactured in a separate mold, to be used later in a subsequent manufacturing process to produce the wind turbine rotor blade or a half shell thereof.

According to an embodiment, a unidirectional gusset (UD gusset) or a cord can be provided in the gap at the outer sides of the prefabricated flange segments, e.g. between the outer edges or in the region of the outer edges of the end faces of the prefabricated flange segments. The UD gusset or the cord runs along the gap, i.e. along the spanwise direction. For example, the unidirectional gusset (UD gusset) or the cord is placed into the mold after step b), i.e. having placed the first prefabricated segment into the mold. For example, the second portion of the first fiber layer is folded around the outer edge and the unidirectional gusset (UD gusset) or the cord is placed below the first fiber layer. Thus, the first fiber layer is arranged between the first flange segment and the UD gusset or cord. This is particularly advantageous, if the first and/or second prefabricated flange segments comprise a chamfer at their outer edge at the respective end face.

According to an embodiment, prior to step c), a second fiber layer is placed into the mold adjacent to the first fiber layer. Then, in step c) the second prefabricated flange segment is placed onto a first portion of the second fiber layer, particularly such that a second portion of the second fiber layer remains uncovered by the second prefabricated flange segment, and the second portion of the second fiber layer extends through the gap.

The second fiber layer further reinforces the gap region between the two flange segments, thereby reducing weak points and enhancing mechanical performance. Thus, the additional fiber layer increases the load-bearing capacity and minimizes the risk of resin pooling, leading to a more robust structure.

The second prefabricated fiber layer is placed into the mold such that its second portion runs along the end face of the first and/or second prefabricated flange segment. Similar to the first fiber layer, the second fiber layer is folded around an outer edge of the end face of the second prefabricated flange segment. The first fiber layer and/or the second fiber layer may extend out of the gap at the inner sides of the first and second prefabricated flange segments, e.g. for later placement onto an inner side of the prefabricated segments.

According to an embodiment, the above-mentioned UD gusset or the cord is placed under the first and second fiber layer, between the two prefabricated flange segments. Thus, the UD gusset or the cord is arranged at the outer sides of the prefabricated flange segments.

According to an embodiment, the second portion of the first fiber layer and/or the second portion of the second fiber layer is at least partially placed onto the inner side of the first prefabricated flange segment or second prefabricated flange segment respectively. This can take place prior to step c), during step c) or after step c). The first fiber layer and/or the second fiber layer may be folded around an inner edge of the end face of the first or second prefabricated flange segment, e.g. to be arranged along an inner side of the first or second prefabricated part. For example, the first fiber layer and/or the second fiber layer comprise a third portion following the second portion. The third portion protrudes out from the gap and is arranged on the inner side of the first or second prefabricated flange segment. Particularly, the first and/or second fiber layer is bent between the second and third portion.

Placing a fiber portion on the inner side of a flange segment improves load distribution and enhances adhesion between the flange segments and the fiber layers. This embodiment ensures better mechanical bonding and reduces stress concentrations at the interface between the fiber layers and flange segments.

According to an embodiment, the first fiber layer and the second fiber layer are connected to each other to form a preform and wherein in step a) the preform is placed into the mold. A preform simplifies the manufacturing process by pre-arranging fiber layers before they are placed into the mold as a single unit. This improves production efficiency, reduces handling errors, and ensures consistent fiber placement for enhanced mechanical properties.

According to an embodiment, the second portions of the first and second fiber layers are connected to each other and form a web, which extends in the gap between the two prefabricated flange segments. The web contributes to the above functions and advantages by reinforcing the gap region where pure resin would otherwise accumulate.

According to an embodiment, the second portions of the first and second fiber layers are connected to each other along one or more connection lines, which run along a spanwise direction of the connecting flange. The connection lines ensure a controlled alignment of the fiber layers to each other and thus a controlled resin infusion process. For example, in case of a preform as defined above, the preform is stabilized by the one or more connection lines. The spanwise direction corresponds to the longitudinal direction of the finished rotor blade.

According to an embodiment, the path of an upper connection line is adapted to a varying thickness of the first and/or second prefabricated flange segment along the spanwise direction. In other words, the upper connection line mimics the change of the thickness of the flange segments. Typically, the thickness of the prefabricated flange segments reduces starting from the root end towards the tip end. Adjusting the connection line to the flange segment thickness enables the fiber layers to be optimally adapted to the structural conditions. This also facilitates the manufacturing process, in particular when the fiber layers are folded onto the inner sides of the prefabricated flange segments. In particular, the upper connection line may run just below the inner edge of the prefabricated flange segments or at the inner edge serving as a bending line.

According to an embodiment, the second portions of the first and second fiber layers are bonded together by an adhesive. Adhesive bonding enhances the mechanical connection between fiber layers. For example, a spray adhesive is used. Alternatively, the adhesive can be provided in bond lines. Bonding (gluing) provides a continuous load distribution, which enhances structural integrity and reduces stress concentrations between the prefabricated flange segments.

According to an embodiment, the second portions of the first and second fiber layers are sewn together with one or more seams. Sewing the fiber layers mechanical interlocks the structure, e.g. the preform. This ensures a robust interconnection between the fiber layers, e.g. of the preform, during the manufacturing process.

For example, the second portions are bonded or sewn together along the connection lines. In other words, the connection lines, are formed by sewing or bonding.

According to an embodiment, the second portions of the first and second fiber layers comprise a free end portion, and wherein the free end portions can be folded away from each other. E.g. the free end portions are the third portions as described above. The free end portions are not connected to each other. The folding away may preferably be along a connection line, e.g. the upper connection line as defined above. The foldable free end portions facilitate a good interconnection with overlaminates, which are placed on the inner sides of the prefabricated flange segments, wherein each overlaminate bridges the gap.

According to an embodiment, a unidirectional gusset (UD gusset) or a cord is arranged between the folded-away free end portions along the gap, i.e. along the spanwise direction, similar to above at the outer side of the prefabricated flange segments. For example, the unidirectional gusset (UD gusset) or the cord is placed from above into the split area between the folded-away end portions. This is particularly advantageous, if the prefabricated flange segments have a chamfer at the inner edge of the end faces to support the folding away.

According to an embodiment, prior to step c), the free end portions are folded to the inner side of the first prefabricated flange segment, and wherein after step c), the free end portions are folded away from each other such that the free end portion of the first fiber layer lies on the inner side of the first prefabricated flange segment and the free end portion of the second fiber layer lies on the inner side of the second prefabricated flange segment. This simplifies the manufacturing process and contributes to the overall mechanical bonding of the flange segments.

According to an embodiment, the first portions of the first fiber layer and/or the second fiber layer are arranged on and connected to a third fiber layer. The three fiber layers together form the preform, as already introduced above. The connection can be done, again, by bonding (gluing) and/or sewing. The third fiber layer may be a bottom layer, which extends below the first fiber layer and/or the second fiber layer and thus below the first and second prefabricated flange segments, e.g. along their outer side. The third fiber layer may comprise a different material than the first and second fiber layer. The third fiber layer adds additional reinforcement, e.g. to the preform. This further contributes to a reliable manufacturing process.

There may be further third layers and/or outer shell layers.

According to an embodiment, the above-mentioned unidirectional gusset (UD gusset) or cord can be integrally formed with the preform comprising a third fiber layer as described above. For example, the unidirectional gusset (UD gusset) or cord is arranged between the first/second fiber layers and the third fiber layer.

According to an embodiment, after step c) one or more inner fiber layers are placed on the inner sides of the first and second prefabricated flange segment, wherein the one or more inner fiber layers bridge the gap and lay on the second portions of the first fiber layer and/or the second fiber layer. The inner fiber layers can be named overlaminates. The additional fiber layers further reinforce the flange interface which increases structural integrity. For example, the inner fiber layers lay at least partially on the free end portions as mentioned above.

According to an embodiment, a length of the first fiber layer and/or the second fiber layer along the spanwise direction corresponds to a length of the first or second prefabricated flange segment. This contributes to the above-mentioned functions and advantages.

According to a second aspect, a wind turbine rotor blade is disclosed, which comprises a first prefabricated flange segment and a second prefabricated flange segment. The prefabricated flange segments are arranged next to each other such that a gap is formed between the prefabricated flange segments. The first prefabricated flange segment is arranged with an outer side on a first portion of a first fiber layer, and a second portion of the first fiber layer extends through the gap.

The wind turbine rotor blade enables the above-mentioned functions and advantages. The above description and embodiments according to the first aspect analogously apply to the wind turbine rotor blade according to the second aspect and vice versa.

Further advantages, features and functions, which are explained in connection with the figures, are given in the following exemplary embodiments of the invention. Identical, similar or similarly acting elements are provided with the same reference signs in the figures.

In the figures:
- FIG. 1: shows a schematic view of a wind turbine.
- FIG. 2: shows a schematic view of a rotor blade.
- FIG. 3: shows a schematic view of a root end of the wind turbine rotor blade.
- FIG. 4-5: show further detailed views of the root flange segments.
- FIG.6-11: show different views according to an embodiment of the invention.
- FIG. 12: a schematic flowchart of a method according to the embodiment of the invention.

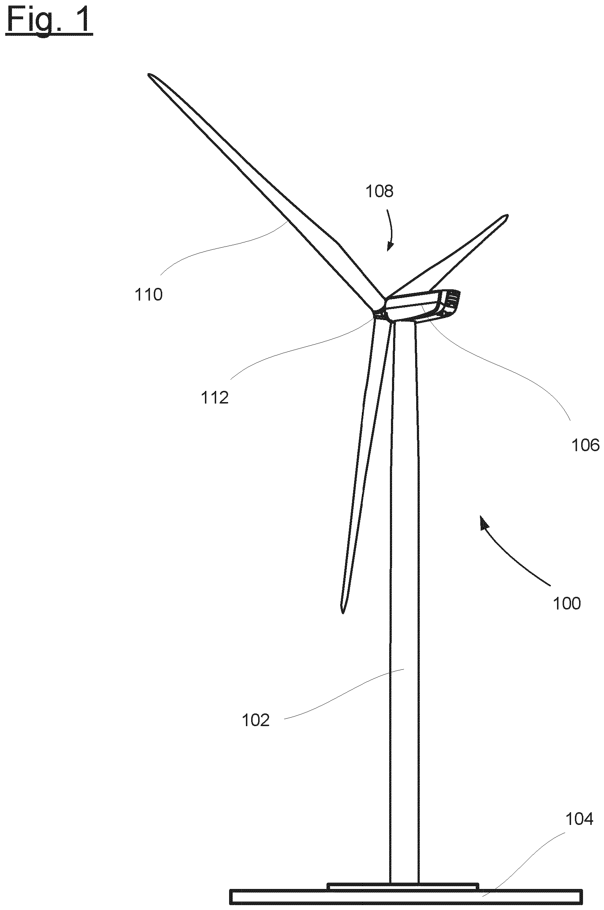

FIG. 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

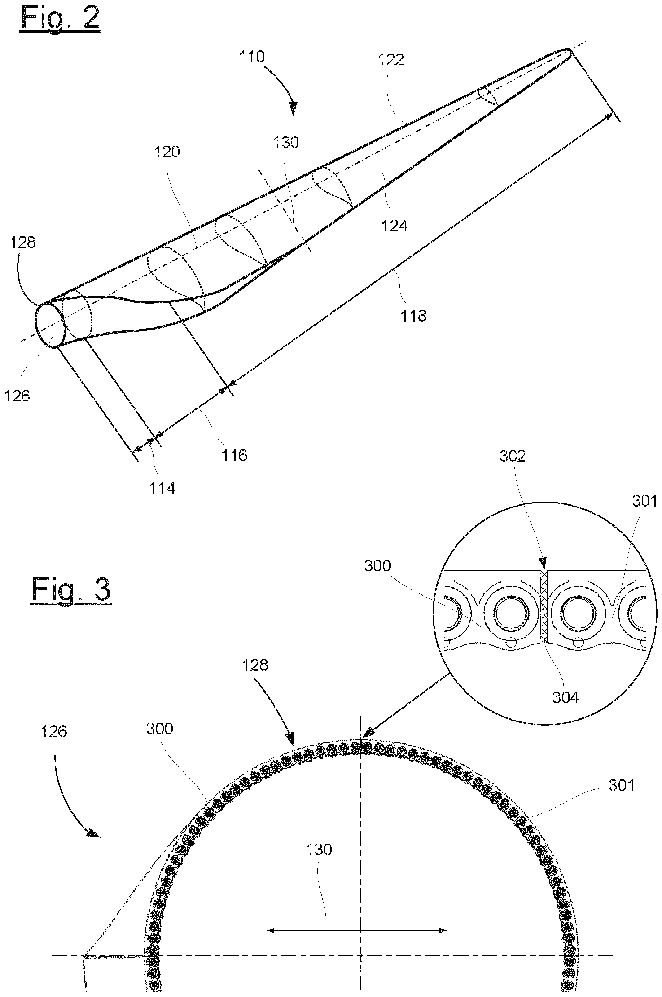

FIG. 2 shows an exemplary wind turbine rotor blade 110. The wind turbine rotor blade 110 has the shape of a conventional rotor blade and has a rotor blade root portion 114 facing the rotor hub 112. The rotor blade root portion 114 typically has an essentially circular cross-section. The rotor blade root portion 114 is followed by a transition portion 116 and profile portion 118. The wind turbine rotor blade 110 has a pressure side 122 and an opposite suction side 124. The wind turbine rotor blade extends along a spanwise direction 120 (also named main extension direction or longitudinal direction) and a chordwise direction 130, which runs transverse to the spanwise direction 120. The wind turbine rotor blade 110 is essentially hollow inside. The wind turbine rotor blade 110 is comprised of two half shells, which are manufactured separately and subsequently bonded together.

In the rotor blade root portion 114 a rotor blade root end 126 with a root flange 128 is provided, by means of which the wind turbine rotor blade 110 can be mechanically connected to a pitch bearing or an extender. The wind turbine rotor blade 110 can be a segmented rotor blade.

FIG. 3 exemplarily shows a root end 126 of a wind turbine rotor blade 110 in more detail. In the present example, four root flange segments 300 (two of them shown), which represent prefabricated parts in the context of this writing, form the root flange 128. The rotor blade 110 resp. the half shells of the rotor blade 110 are manufactured in a concavely shaped mold (not shown) and respective elements for manufacturing the wind turbine rotor blade 110 are placed like prefabricated flange segments, fiber layers and others. Later, the elements in the mold are infused with resin and cured to form the final half shell of the wind turbine rotor blade 110, as already indicated above.

In the present example, two root flange segments 300 and 301, which represent prefabricated flange segments in the context of this writing, are inserted into the mold next to each other with respect to the chordwise direction 130. The position of the root flange segments 300, 301 is fixed with respect to the mold, as already explained. The root flange segments 300, 301 are fixed to a flange part, e.g. via screw bolts, the flange part being mounted in a fixed manner to the mold (not shown).

In an enlarged envision the border area between two root flange segments is shown.

Between the two root flange segments 300 a gap 302 is formed, which gap 302 may vary slightly depending on manufacturing tolerances, for example. In the gap 302 fiber material 304 is placed.

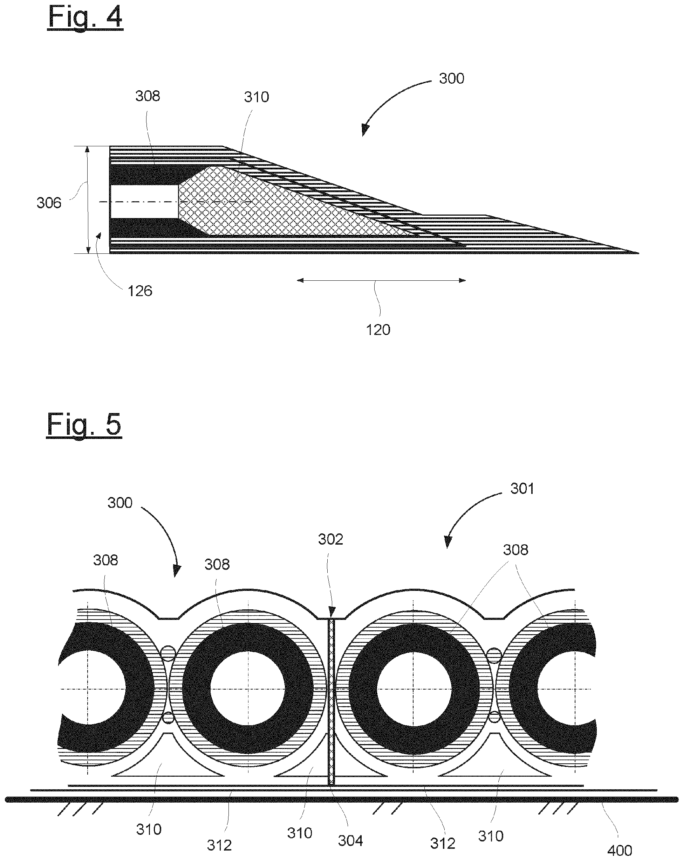

FIG. 4 schematically shows one of the root flange segments 300 in a cross-sectional view, the cross-sectional plane running along the spanwise direction 120. As can be seen, the thickness 306 of the root flange segments 300, 301 decreases starting from the rotor blade root end 126.

FIG. 5 schematically shows the two adjacent root flange segments 300, 301 in a detailed view. Each root flange segment 300, 301 comprises, for example, connecting elements, e.g. metal threaded bushings 308, core elements 310, e.g. a foamed material like polyurethan foam or balsa wood, and fiber material. The root flange segments 300, 301 are arranged in a mold 400.

Between the two root flange segments 300, 301 a gap 302 is formed, which gap 302 may vary slightly depending on manufacturing tolerances. As shown in FIG. 5, the root flange segments 300, 301 are typically placed on one or more outer fiber layers 312. Between the two root flange segments 300, 301, fiber material 304 is brought into the gap 302, thus reinforcing the gap region and avoiding that the gap 302 is only filled with resin during the vacuum infusion process to form the connecting flange (here root flange 128) and the wind turbine rotor blade 110.

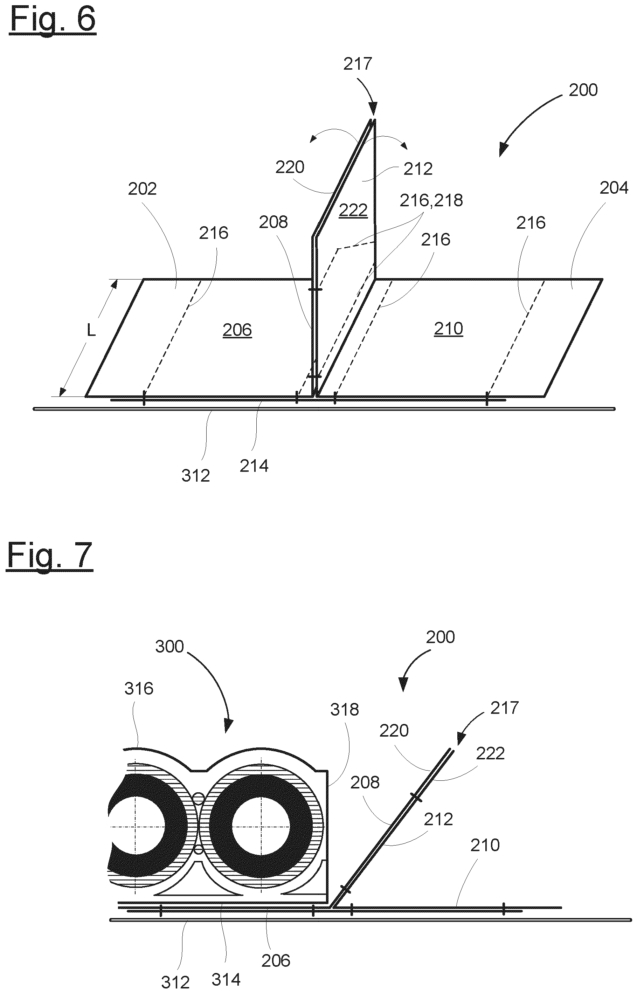

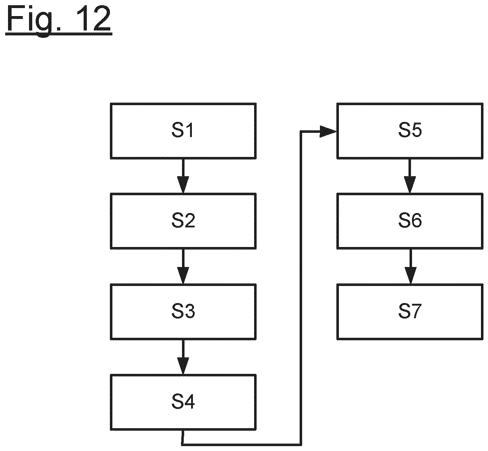

In the following, an improved method for manufacturing a connecting flange of a wind turbine rotor blade 110 according to an embodiment of invention is described alongside FIG. 6 to 12 wherein FIG. 12 shows a schematic flowchart of the method. The method is described below using the root flange 128 as an example, but it applies equally to the segmentation flange mentioned in the introductory portion above.

In a first step S1, with regard to FIG. 6, one or more outer fiber layers 312, i.e. outer overlaminates, are placed in the mold 400 (mold not shown in figures 6 to 11).

In a next step S2, a preform 200 is placed into the mold 400 onto the outer fiber layers 312. The preform 200 is described in more detail with the aid of FIG. 6.

The preform 200 comprises a first fiber layer 202, a second fiber layer 204, and a third fiber layer 214. With the third fiber layer 214, the preform 200 is placed in the mold 400.

In the example, the fiber layers 202, 204 and 214 are glass fiber layers. The first and second fiber layers 202, 206 may comprise a different material or material composition than the third fiber layer 214. The fiber layers 202, 204 and 214 have a length L, which corresponds to a length of the root flange segments 300, 301 along the spanwise direction 120 of the root flange 128 or the finished wind turbine rotor blade 110.

The first fiber layer 202 has a first portion 206 and a second portion 208. The second fiber layer 204 has a first portion 210 and a second portion 212. The first portion 206 of the first fiber layer 202 and the first portion 210 of the second fiber layer 204 are connected to the third layer 214 along one or more connection lines 216. Here, the first portions 206 and 210 are sewn to the third layer 214 with respective seams. The first portion 206 of the first fiber layer 202 and the first portion 210 of the second fiber layer 204 run parallel to the third layer 214. The second portions 208, 212 of the two fiber layers 202, 204 extend away from the third layer 214. The second portions 208, 212 are connected to each other along on or more connection lines 216. The second portions 208, 212 of the two fiber layers 202, 204 form a web 217. An upper connection line 218 of the connection lines 216 of the second portions 208, 212 has a path, which is adapted to the thickness 306 of the root flange segments 300. The upper connection line 218 is arranged furthest away from the third fiber layer 214 or the inner mold surface.

In the example, the connection lines 216 run along the spanwise direction 120. However, different connection paths and/or different types of connections like gluing are possible, too.

Further, the second portions 208, 212 of the first and second fiber layers 202, 204 comprise a free end portion 220, 222. The free end portions 220, 222 can be folded away from each other, as will described later in more detail. In other words, the free end portions 220, 222 are not connected to each other.

In step S2, the web 217 of the preform 200 can be tilted slightly towards one of the first portions, here the first portion 210 of the second fiber layer 204.

In a next step S3, a first root flange segment 300 is placed with an outer side 314 onto the first portion 206 of the first fiber layer 202 (see FIG. 7). Thereby, the second portions 208, 212 of the preform 200 remain uncovered. The outer side 314 is opposite to an inner side 316 of the first root flange segment 300.

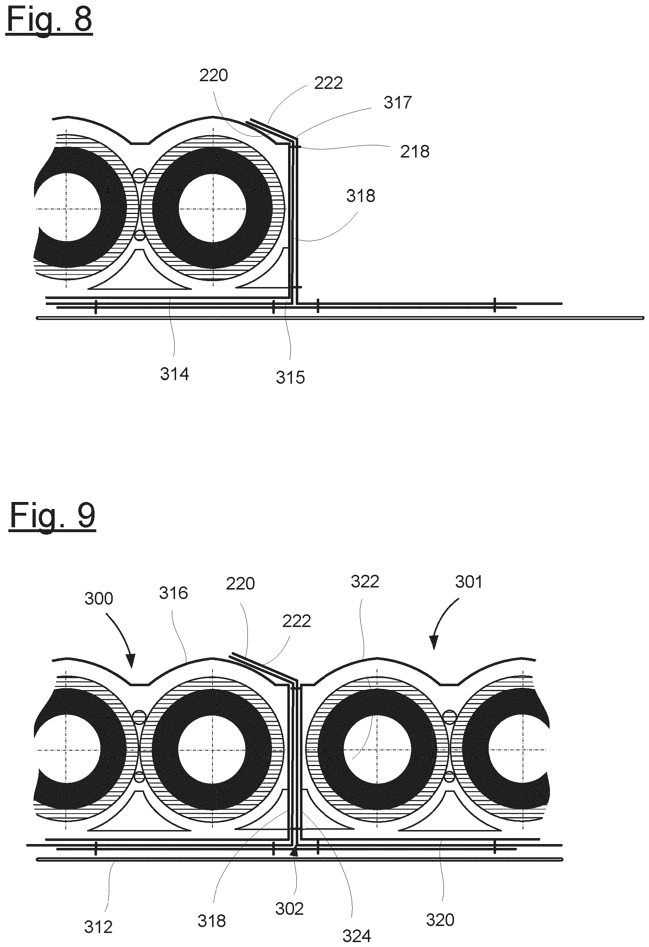

In a next step S4 (see FIG. 8), the web 217 is tilted against an end face 316 of the first root flange segment 300. The end face 316 runs transverse to the outer side normal to the third fiber layer 214. The second portions 208, 212 of the fiber layers 202, 204 essentially run along the end face 318, wherein the free end portions 220, 222 are bent (folded) to the inner side 316 of the first root flange segment 300. The bending takes preferably place at the upper connection line 218 or in the region of the upper connection line 218. Thus, the first portion 206 of the first fiber layer 202 is folded around an outer edge 315 of the end face 316. The second portion 208 of the first fiber layer 202 is folded around an inner edge 317 of the end face 318.

In a next step S5 (see FIG. 9), the second root flange segment 301 is placed into the mold 400 adjacent to the first root flange segment 300. The second root flange segment 301 is placed with an outer side 320 onto the first portion 210 of the second fiber layer 204. The outer side 320 is opposite of the inner side 322 of the second root flange segment 301. An end face 324 of the second root flange segment 301 faces the end face 318 of the first root flange segment 300. Thus, the above-described gap 302 is formed between the root flange segments 300, 301. The second portions 208, 212 of the fiber layers 202, 204 extend through the gap 302, wherein the free end portions 220, 222 protrude out of the gap 302.

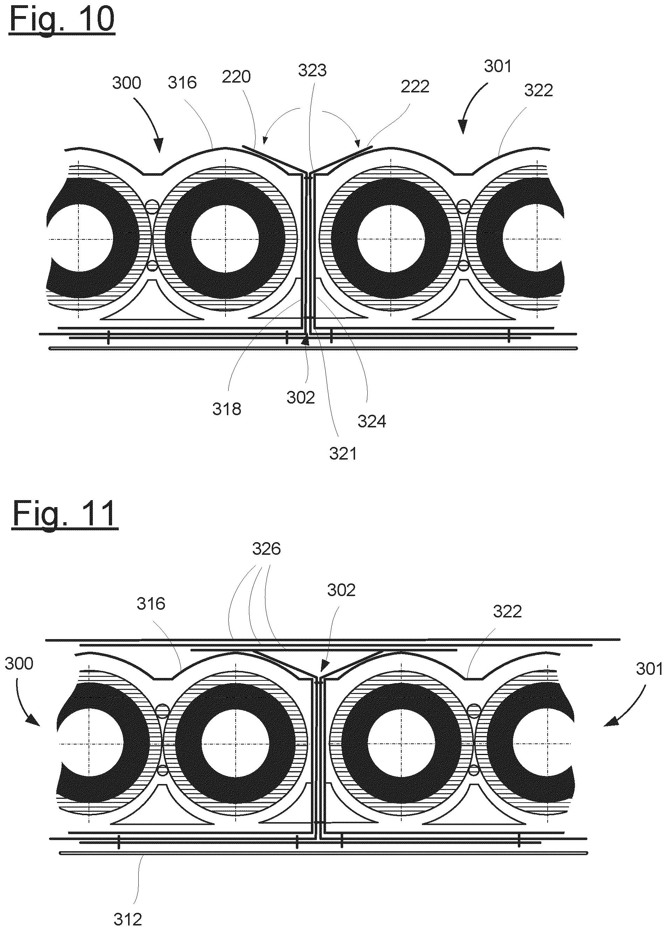

In a next step S6 (see. FIG. 10), the free end portions 220, 222 are folded away from each other such that the free end portion 220 of the first fiber layer 202 lies on the inner side 316 of the first root flange segment 300 and the free end portion 222 of the second fiber layer 204 lies on the inner side 322 of the second root flange segment 301. Thus, the first portion 210 of the second fiber layer 204 is folded around an outer edge 321 of the end face 324. The second portion 212 of the second fiber layer 204 is folded around an inner edge 323 of the end face 324.

In a further step S7 (see. FIG. 11), one or more inner fiber layers 326, i.e. inner overlaminates, are placed on the inner sides 316, 322 of the first and second root flange segment 300, 301, wherein the one or more inner fiber layers 326 bridge the gap 302 and lay on the free end portions 220, 222 of the first fiber layer 202 and the second fiber layer 204.

In a subsequent step, a resin infusion process may take place in order to manufacture the final root flange 128 and thus the wind turbine rotor blade 110.

The above-described method enables the mentioned functions and advantages. Essentially, the gap is not filled with fiber material, which is only arranged in the gap. Rather, at least one fiber layer (above both fiber layers 202, 204) runs outside the gap 302 and is routed through the gap 302 in a defined, ordered way.

Instead of only one first, second and/or third fiber layer 202, 204, 214, two or more first, second or third fiber layers can be used. The fiber layers of each type are stacked on top of each other. For example, the preform 200 comprises three first fiber layers 202, wherein the first portions 206 of the first fiber layers 202 are arranged on top of each other. The web 217, in this example, is formed by in total six second portions 208 and 212 of the first and second fiber layer 202, 204.

### LIST OF REFERENCE SIGNS

- 100: wind turbine
- 102: tower
- 104: foundation
- 106: nacelle
- 108: rotor
- 110: wind turbine rotor blade
- 112: rotor hub
- 114: rotor blade root portion
- 116: transition portion
- 118: profile portion
- 120: spanwise direction
- 122: pressure side
- 124: suction side
- 126: rotor blade root end
- 128: root flange
- 130: chordwise direction

- 200: preform
- 202: first fiber layer
- 204: second fiber layer
- 206: first portion of first fiber layer
- 208: second portion of first fiber layer
- 210: first portion of second fiber layer
- 212: second portion of second fiber layer
- 214: third fiber layer
- 216: connection line
- 217: web
- 218: upper connection line
- 220: free end portion of first fiber layer
- 222: free end portion of second fiber layer

- 300: first root flange segment
- 301: second root flange segment
- 302: gap
- 304: fiber material
- 306: thickness
- 308: bushing
- 310: core element
- 312: outer fiber layer
- 314: outer side of the first root flange segment
- 315: outer edge of the first root flange segment
- 316: inner side of the first root flange segment
- 317: inner edge of the first root flange segment
- 318: end face of the first root flange segment
- 320: outer side of the second root flange segment
- 321: outer edge of the second root flange segment
- 322: inner side of the second root flange segment
- 323: inner edge of the second root flange segment
- 324: end face of the second root flange segment
- 326: inner fiber layer

- 400: mold

- L: length

## Claims

1. Method for manufacturing a connecting flange (128) of a wind turbine rotor blade (110), comprising the following steps:
a) placing a first fiber layer (202) into a mold (400),
b) placing a first prefabricated flange segment (300) with an outer side (314) onto a first portion (206) of the first fiber layer (202), in particular such that a second portion (208) of the first fiber layer (202) remains uncovered by the first prefabricated flange segment (300),
c) placing a second prefabricated flange segment (301) into the mold (400) adjacent to the first prefabricated flange segment (300), wherein an end face (324) of the second prefabricated flange segment (301) faces the end face (318) of the first prefabricated flange segment (300) such that a gap (302) is formed between the two prefabricated flange segments (300, 301) and a second portion (208) of the first fiber layer (202) extends through the gap (302).

2. Method according to claim 1, wherein
- prior to step c), a second fiber layer (204) is placed into the mold (400) adjacent to the first fiber layer (202),
- in step c) the second prefabricated flange segment (301) is placed onto a first portion (210) of the second fiber layer (204), in particular such that a second portion (212) of the second fiber layer (204) remains uncovered by the second prefabricated flange segment (301), and
- the second portion (212) of the second fiber layer (204) extends through the gap (302).

3. Method according to claim 1 or 2, wherein the second portion (208) of the first fiber layer (202) and/or the second portion (212) of the second fiber layer (204) is at least partially placed onto the inner side (316, 322) of the first prefabricated flange segment (300) or second prefabricated flange segment (301) respectively.

4. Method according to claim 2 or 3, wherein the first fiber layer (202) and the second fiber layer (204) are connected to each other to form a preform (200) and wherein in step a) the preform (200) is placed into the mold (400).

5. Method according to any one of claims 2 to 4, wherein the second portions (208, 212) of the first and second fiber layers (202, 204) are connected to each other and form a web (217), which extends in the gap (302) between the two prefabricated flange segments (300, 301).

6. Method according to any one of claims 2 to 5, wherein the second portions (208, 212) of the first and second fiber layers (202, 204) are connected to each other along one or more connections lines (216), which run along a spanwise direction (120) of the connecting flange (128).

7. Method according to claim 6, wherein the path of an upper connection line (218) is adapted to a varying thickness (306) of the first and/or second prefabricated flange segment (300, 301) along the spanwise direction (120).

8. Method according to any one of claims 2 to 7, wherein the second portions (208, 212) of the first and second fiber layers (202, 204) are bonded together by an adhesive.

9. Method according to any one of claims 2 to 8, wherein the second portions (208, 212) of the first and second fiber layers (202, 204) are sewn together with one or more seams.

10. Method according to any one of claims 2 to 9, wherein the second portions (2β8, 212) of the first and second fiber layers (202, 204) comprise a free end portion (220, 222), and wherein the free end portions (220, 222) can be folded away from each other.

11. Method according to claim 10, wherein, prior to step c), the free end portions (220, 222) are folded to the inner side (316) of the first prefabricated flange segment (300), and wherein after step c), the free end portions (220, 222( are folded away from each other such that the free end portion (220) of the first fiber layer (204) lies on the inner side (316) of the first prefabricated flange segment (300) and the free end portion (222) of the second fiber layer (204) lies on the inner side (322) of the second prefabricated flange segment (301).

12. Method according to any one of claims 2 to 11, wherein the first portions (206, 210) of the first fiber layer (202) and/or the second fiber layer (204) are arranged on and connected to a third fiber layer (214).

13. Method according to any one of the preceding claims, wherein after step c) one or more inner fiber layers (326) are placed on the inner sides (316, 322) of the first and second prefabricated flange segment (300, 301), wherein the one or more inner fiber layers (326) bridge the gap (302) and lay on the second portions (208, 212) of the first fiber layer (202) and/or the second fiber layer (204).

14. Method according to any one of the preceding claims, wherein a length (L) of the first fiber layer (202) and/or the second fiber layer (204) along the spanwise direction (120) corresponds to a length of the first or second prefabricated flange segment (300, 301).

15. Wind turbine rotor blade (110), comprising a first prefabricated flange segment (300) and a second prefabricated flange segment (301), the prefabricated flange segments (300, 301) being arranged next to each other such that a gap (302) is formed between the prefabricated flange segments (300, 301),
wherein
- the first prefabricated flange segment (300) is arranged with an outer side (314) on a first portion (206) of a first fiber layer (202), and
- a second portion (208) of the first layer (202) extends through the gap (302).
